# EUROPEAN PATENT APPLICATION

(11) **EP 4 496 079 A1**
(43) Date of publication of application: **22.01.2025**
(21) Application number: 23891810.6
(22) Date of filing: 27.09.2023
(51) Int. Cl.: H01M 10/655, H01M 10/647, H01M 10/6567, H01M 10/6568, H01M 10/6556, H01M 10/653, H01M 10/613, H01M 50/211, H01M 50/242

(54) **BATTERY MODULE WITH IMPROVED COOLING STRUCTURE, AND BATTERY PACK INCLUDING SAME**

(30) Priority: 16.11.2022 KR 20220154007
(71) Applicant: LG Energy Solution, Ltd., Seoul 07335 (KR)
(72) Inventor: KIM, Dooseung, Daejeon 34122 (KR); UM, Taeki, Daejeon 34122 (KR); LEE, Jung Hoon, Daejeon 34122 (KR)
(74) Representative: Plasseraud IP
(86) International application number: PCT/KR2023/014962
(87) International publication number: WO 2024/106741

(57) **Abstract**

A battery module according to an embodiment of the present disclosure includes: a cell assembly formed by stacking a plurality of battery cells in one direction, a heat dissipation member that comes into contact with the battery cell within the cell assembly, and a module frame that houses the cell assembly, wherein the heat dissipation member includes a plate-shaped member parallel to one surface of the battery cell, and a reinforcing member extending from at least one of the first part and the second part of the plate-shaped member.

## Description

### [TECHNICAL FIELD]

### Cross Citation with Related Application(s)

This application claims the benefit of Korean Patent Application No. 10-2022-0154007 filed on November 16, 2022 with the Korean Intellectual Property Office, the disclosure of which is incorporated herein by reference in its entirety.

The present disclosure relates to a battery module and a battery pack including the same, and more particularly, to a battery module with improved cooling structure and a battery pack including the same.

### [BACKGROUND]

As the technology development of and the demand for mobile devices have increased, the demand for secondary batteries as energy sources has been rapidly increasing. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

In small mobile devices, one, or two, or three battery cells are used per device, while medium- or large-sized devices such as vehicles require high power and large capacity. Therefore, a medium- or large-sized battery module having a plurality of battery cells electrically connected to one another is used.

On the other hand, when a plurality of battery cells are connected in series/parallel to configure a battery pack, it is common to configure a battery module composed of at least one battery cell first and then configure a battery pack by using at least one battery module and adding other components.

Since battery cells constituting such a medium- or large-sized battery module are secondary batteries which can be charged and discharged, such high-output large-capacity secondary battery generates a large amount of heat during a charging and discharging process. In this case, heat generated from multiple battery cells can be added up in a narrow space, so that the temperature can rise more quickly and excessively. In other words, battery modules in which multiple battery cells are stacked and a battery pack equipped with these battery modules can obtain high output, but it is not easy to remove heat generated from the battery cells during charging and discharging. When the heat dissipation of battery cells is not properly performed, deterioration of the battery cells is accelerated, the life is shortened, and the possibility of explosion or ignition increases.

Moreover, in the case of a battery module included in a vehicle battery pack, it is frequently exposed to direct sunlight and may be placed under high-temperature conditions such as summer or desert areas. Further, since multiple battery modules are concentratedly disposed to increase the mileage of the vehicle, a flame or heat generated in any one of the battery modules can easily propagate to an adjacent battery module, which may eventually lead to ignition or explosion of the battery pack itself.

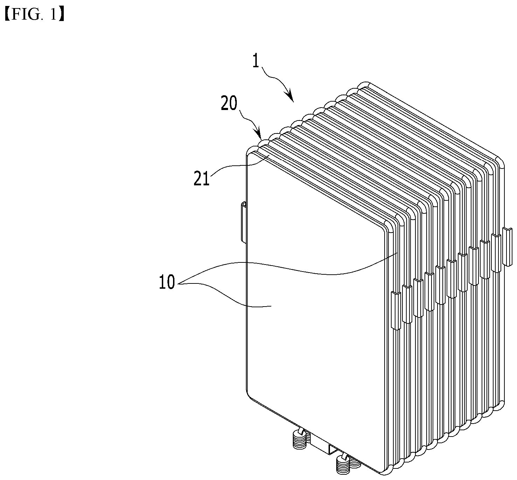

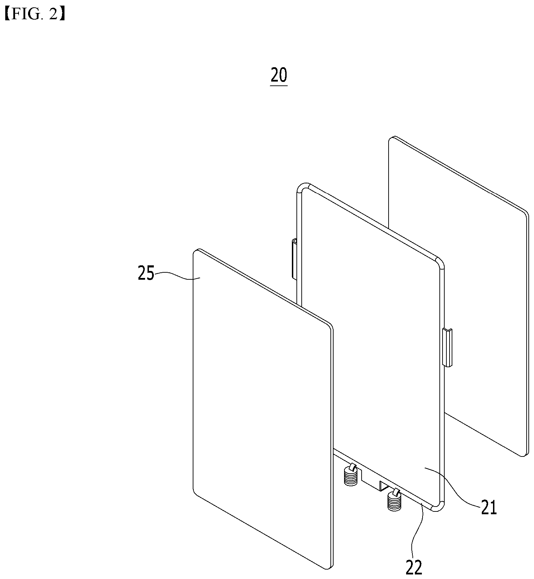

FIG. 1 is a perspective view showing a battery cell assembly to which conventional cooling fins are applied. FIG. 2 is an exploded view showing a cooling fin structure disposed between battery cells included in the battery cell assembly of FIG. 1.

Referring to FIGS. 1 and 2, the conventional battery cell assembly 1 includes a plurality of battery cells 10 formed by stacking them side by side in one direction, and cooling fins 20 interposed between mutually adjacent battery cells 10. The cooling fins 20 may include a plate-shaped heat dissipation plate 21 shown in FIG. 2 and a coolant pipe 22 formed on the edge of the heat dissipation plate 21, and an insulating sheet layer 25 formed on each of the upper and lower surfaces or left and right surfaces of the heat dissipation plate 21. At this time, the insulating sheet layer 25 may be omitted, and the surface of the heat dissipation plate 21 may be subjected to insulation coating.

The coolant pipe 22 may be hook-coupled with the heat dissipation plate 21, or the coolant pipe 22 and the heat dissipation plate 21 may be integrally formed. The coolant pipe 22 is formed to be disposed outside the battery cell 10.

The battery cell assembly 1 can be housed in a module frame (not shown) to form a battery module, and heat generated in the battery cells can be cooled by the cooling fins 20 included in the battery cell assembly 1. However, a separate insulating sheet layer or coating layer is required to ensure the thickness and electrical insulation of the cooling fins 20 and thus, the space utilization rate is low.

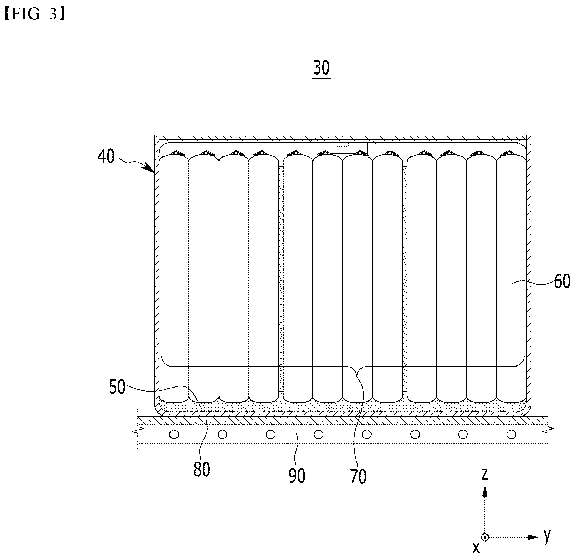

FIG. 3 is a diagram showing heat discharge paths in a conventional battery module.

Referring to FIG. 3, a conventional battery module 30 includes a cell assembly 70 including battery cells 60 stacked in a preset direction, and a module frame 40 that houses the cell assembly 70, wherein the cell assembly 70 is fixedly located on the thermally conductive resin layer 50 located on the lower surface of the module frame 40. In this case, in order to cool the heat generated in the cell assembly 70, a heat sink 90 that comes into contact with a bottom part of the module frame 40 located in the -z axis direction of FIG. 3 is provided, and a heat conduction pad 80 for heat transfer may be further installed between the heat sink 90 and the bottom part of the module frame 40.

However, since the heat sink 90 does not receive transfer of heat while coming into direct contact with the cell assembly 70, its cooling efficiency is not very high, and the cooling path is formed in one of the width directions (-z axis direction) of the battery cell so that a temperature gradient may occur. In addition, since the structure of FIG. 3 is configured such that the thermally conductive resin layer 50 fixes the cell assembly 70 on one side, a pouch cell crack issue may occur when large swelling occurs in high-capacity batteries such as all-solid-state batteries and silicon-based batteries.

Therefore, in order to extend the life of the battery module and/or the battery pack, it is necessary to improve the cooling efficiency of the battery module/battery pack and reinforce structural stability so that the temperature of the battery cells does not increase.

### [DETAILED DESCRIPTION OF THE INVENTION]

### [Technical Problem]

It is an object of the present disclosure to provide a battery module and a battery pack that can improve heat transfer performance by changing the conventional cooling fin structure.

It is another object of the present disclosure to provide a battery module and a battery pack that increase space utilization rate while maintaining uniform cell temperature, in cells that have been enlarged to achieve high-speed charging and high-capacity cells.

It is another object of the present disclosure to provide a battery module and a battery pack that extend cell life by eliminating spatial non-uniformity in cooling performance caused by the cell body not being directly cooled in an impregnated cooling structure.

It is yet another object of the present disclosure to provide a battery module and a battery pack that reinforce structural stability in the z-axis direction.

The objects of the present disclosure are not limited to the foregoing objects, and any other objects and advantages not mentioned herein should be clearly understood by those skilled in the art from the following description and the accompanying drawing.

### [Technical Solution]

According to an embodiment of the present disclosure, there is be provided a battery module comprising: a cell assembly formed by stacking a plurality of battery cells in one direction, a heat dissipation member that comes into contact with the battery cell within the cell assembly, and a module frame that houses the cell assembly, wherein the heat dissipation member includes a plate-shaped member parallel to one surface of the battery cell, and a reinforcing member extending from at least one of the first part and the second part of the plate-shaped member.

A cell unit including the battery cell and the heat dissipation member includes a first battery cell and a second battery cell, a first heat dissipation member located on one surface of the first battery cell, and a second heat dissipation member located on one surface of the second battery cell, wherein among the extension parts of the first and second reinforcing members included respectively in the first and second heat dissipation members, a first opening part that exposes a part of the first and second battery cells is formed between the extension parts that come into direct contact with the first and second battery cells.

A second opening part that exposes a part of the module frame may be formed between the extension part of the first reinforcing member and the extension part of the second reinforcing member.

A cooling passage is formed inside the first and second reinforcing members, and the cooling passage is impregnated with an insulating coolant, so that the insulating coolant and the battery cell may come into direct contact with each other through the first opening part.

The cell units are stacked in a plurality of numbers within the cell assembly, and may further comprise a compression pad located between mutually adjacent cell units among the cell units stacked in a plurality of numbers.

The cell unit may further comprise a compression pad located between the first battery cell and the second battery cell.

The cell units are stacked in a plurality of numbers within the cell assembly, and further comprise a compression pad located between mutually adjacent cell units among the cell units stacked in a plurality of numbers.

The reinforcing member comprises at least two extension parts parallel to each other, and a cooling passage may be formed between the two extension parts.

The cooling passage is impregnated with an insulating coolant, so that the insulating coolant and the battery cell may come into direct contact with each other.

The reinforcing member may have an extrusion molding type structure.

The at least two extension parts may extend in the same direction from the plate-shaped member.

The reinforcing member may have a press molding type structure.

The reinforcing member extends from the plate-shaped member in a zigzag shape, and may be formed in the space between the battery cell and the module frame.

The reinforcing members are formed on an upper edge and a lower edge of the plate-shaped member, respectively, and the reinforcing member may come into direct contact with an upper part and a lower part of the module frame, respectively.

The plate-shaped member and the reinforcing member included in the heat dissipation member are integrally formed, and the reinforcing member may be formed by bending the plate-shaped member.

The heat dissipation member may comprise aluminum, stainless steel, copper, gold, graphite, graphene, CNT (carbon nanotube), or a composite material thereof.

The heat dissipation member may have a form in which at least two of aluminum, stainless steel, copper, gold, graphite, graphene, and CNT (carbon nanotube) are laminated together.

An insulating coolant may be impregnated within the module frame.

According to another embodiment of the present disclosure, there is be provided a battery pack comprising the above mentioned battery module.

### [Advantageous Effects]

According to the embodiments, the heat dissipation member is made of a material that is lighter and thinner than the conventional one, thereby being able to improve heat transfer performance.

In addition, in an impregnated cooling structure, the heat dissipation member interposed between the battery cells extends from the upper and/or the lower part of the cell assembly and directly contacts the insulating coolant, thereby being able to increase cooling efficiency.

Further, a shape is added to reinforce the rigidity of the cell unit in which the battery cell and the heat dissipation member are combined, thereby being able to 1improve the structural stability of the battery module.

Effects obtainable from the present disclosure are not limited to the effects mentioned above, and additional other effects not mentioned will be clearly understood from the description and the accompanying drawings by those skilled in the art.

### [BRIEF DESCRIPTION OF THE DRAWINGS]

FIG. 1 is a perspective view showing a battery cell assembly to which conventional cooling fins are applied;
FIG. 2 is an exploded view showing a cooling fin structure disposed between battery cells included in the battery cell assembly of FIG. 1;
FIG. 3 is a diagram showing heat discharge paths in a conventional battery module;
FIG. 4 is a perspective view showing a battery module according to an embodiment of the present disclosure;
FIG. 5 is a perspective view showing one battery cell included in the cell assembly of FIG. 4;
FIG. 6 is a perspective view showing a cell unit included in the battery module of FIG. 4;
FIG. 7 is a front view of the cell unit of FIG. 6 viewed along the x-axis direction;
FIG. 8 is a perspective view showing a cell unit according to another embodiment of the present disclosure;
FIG. 9 is a front view of the cell unit of FIG. 8 viewed along the x-axis direction.
FIG. 10 is a diagram showing a part of a cell assembly including the cell unit of FIG. 6;
FIGS. 11 and 12 are diagrams showing a modification of the cell assembly of FIG. 10;
FIG. 13 is a diagram showing a part of a cell assembly including the cell unit of FIG. 8; and
FIGS. 14 and 15 are diagrams showing modifications of the cell assembly of FIG. 13.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure can be modified in various different ways, and is not limited to the embodiments set forth herein.

Portions that are irrelevant to the description will be omitted to clearly describe the present disclosure, and like reference numerals designate like elements throughout the description.

Further, since the size and thickness of each element shown in the accompanying drawing are arbitrarily illustrated for convenience of explanation, it would be obvious that the present disclosure is not necessarily limited to those illustrated in the drawings. In the drawings, the thickness are exaggerated for clearly expressing several layers and regions. In the drawings, for convenience of explanation, the thicknesses of some layer and regions are exaggerated.

Further, throughout the description, when a portion is referred to as "including" or "comprising" a certain component, it means that the portion can further include other components, without excluding the other components, unless otherwise stated.

Further, throughout the description, when it is referred to as "planar", it means when a target portion is viewed from the upper side, and when it is referred to as "cross-sectional", it means when a target portion is viewed from the side of a cross section cut vertically.

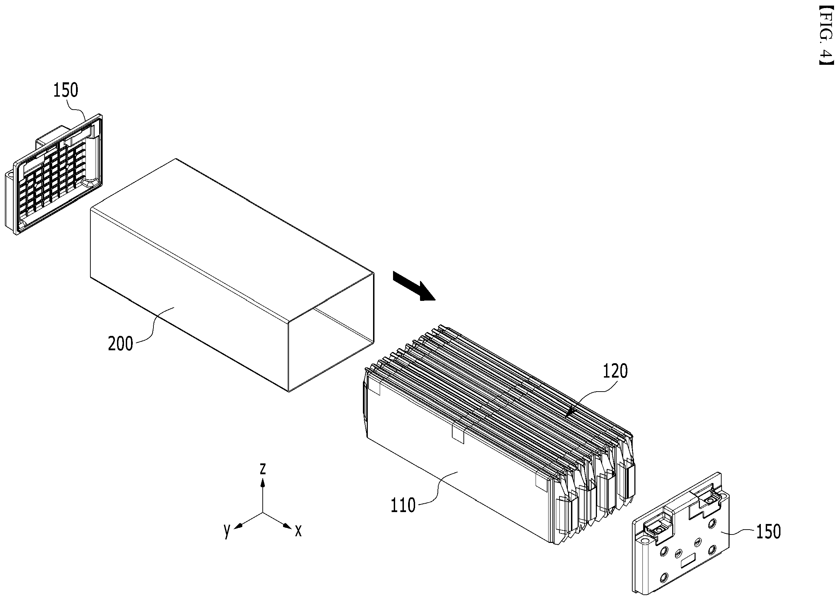

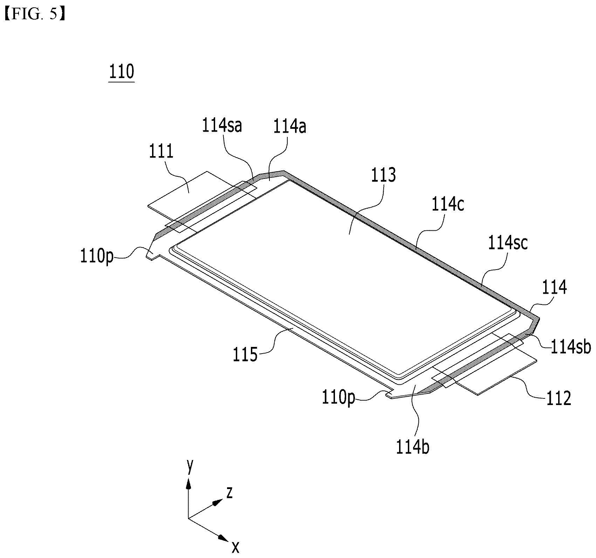

FIG. 4 is a perspective view showing a battery module according to an embodiment of the present disclosure. FIG. 5 is a perspective view showing one battery cell included in the cell assembly of FIG. 4.

Referring to FIG. 4, the battery module according to an embodiment of the present disclosure includes a cell assembly 120 formed by stacking a plurality of battery cells 110 in one direction, a module frame 200 opening on the front and rear surfaces to house the cell assembly 120, and end plates 150 that covers the front and rear surfaces of the module frame 200.

The end plates 150 may be located on the opened first side (x-axis direction) and second side (-x-axis direction) of the module frame 200, and may be formed to cover the cell assembly 120. This end plate 150 can physically protect the cell assembly 120 and other electrical components from external impacts. Additionally, the battery module according to this embodiment may further include a busbar frame (not shown) located between the cell assembly 120 and the end plate 150, and an insulating cover (not shown) located between the busbar frame and the end plate 150. On the busbar frame, an electrode lead protruding from the battery cell 110 and a busbar for electrically connecting adjacent cells may be coupled. The insulating cover may perform the role of electrical insulation between the end plate 150 and electrical components on the cell assembly 120 and/or the busbar frame.

In the present embodiment, the module frame 200 is shown as a mono frame configured to surround the four surfaces of the upper, lower, left and right of the cell assembly 120, but is not limited thereto. The module frame may have a structure in which the left and right surfaces and the lower surface of the cell assembly 120 are covered by a U-shaped lower frame, the upper surface of the cell assembly 120 is covered by an upper plate, and then the U-shaped lower frame and upper plate are combined.

Referring to FIGS. 4 and 5, the cell assembly 120 includes a plurality of battery cells 110 stacked in one direction, and a plurality of battery cells 110 may be stacked in the y-axis direction as shown in FIG. 4. The battery cell 110 is preferably a pouch-type battery cell. For example, referring to FIG. 5, the battery cell 110 according to this embodiment has a structure in which two electrode leads 111 and 112 respectively protrude from one end 114a and the other end 114b of the cell body 113 toward mutually opposite directions. The battery cell 110 can be produced by joining both ends 114a and 114b of a cell case 114 and one side surfaces 114c connecting them in a state in which an electrode assembly (not shown) is housed in a cell case 114. In other words, the battery cell 110 according to the present embodiment has a total of three sealing parts 114sa, 114sb and 114sc, wherein the sealing parts 114sa, 114sb and 114sc have a structure that is sealed by a method such as thermal fusion, and the remaining other side part may be composed of a connecting part 115. Between both ends 114a and 114b of the battery case 114 may be defined as a longitudinal direction of the battery cell 110, and between one side part 114c connecting both ends 114a and 114b of the cell case 114 and the connecting part 115 may be defined as a widthwise direction of the battery cell 110.

The connecting part 115 is a region that extends long along one edge of the battery cell 110, and a protrusion part 110p of the battery cell 110 may be formed at an end of the connecting part 115. The protruding part 110p may be formed on at least one of both ends of the connecting part 115, and may protrude in a direction perpendicular to the direction in which the connecting part 115 extends. The protrusion part 110p may be located between the connecting part 115 and one of the sealing parts 114sa and 114sb of both ends 114a and 114b of the cell case 114.

The cell case 114 is generally formed in a laminated structure of resin layer/metal thin film layer/resin layer. For example, when the surface of the cell case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, a tacky adhesive such as a double-sided tape or a chemical adhesive that bonds through chemical reactions during adhesion can be attached to the surface of the battery case to form a cell assembly 120. According to one embodiment of the present disclosure, a heat dissipation member coming into contact with the battery cell 110 is formed, as will be described later. For example, the heat dissipation member is formed between mutually adjacent battery cells 110, and the heat dissipation member and the battery cells 110 are fixed with an adhesive member or the like to form a cell assembly 120, or even without using an adhesive member, the cell assembly 120 may be formed using other fixing members.

In the present embodiment, the cell assembly 120 is housed inside the module frame 200 and can be cooled by an insulating coolant impregnated within the module frame 200. The insulating coolant may be an insulating coolant or insulating oil that has electrically insulating properties. When the module frame 200 is impregnated with an insulating coolant and cooling progresses, the battery cell 110 and the coolant can come into direct contact with each other, thereby increasing cooling efficiency. However, since the portion corresponding to the cell body 113 of the battery cell 110 shown in FIG. 5 is not directly exposed to the insulating coolant, it may cause spatial non-uniformity in cooling performance. This results in a local temperature increase of the battery cell 110, which may cause deterioration of the battery cell.

In order to solve such problems, according to an embodiment of the present disclosure, a heat dissipation member, which will be described later, is formed to be interposed between the first battery cell and the second battery cell within the cell assembly 120. For example, the heat dissipation member may be disposed between mutually adjacent battery cells 110. The heat dissipation member may be formed once for every two battery cells 110, or may be formed once for every four battery cells 110.

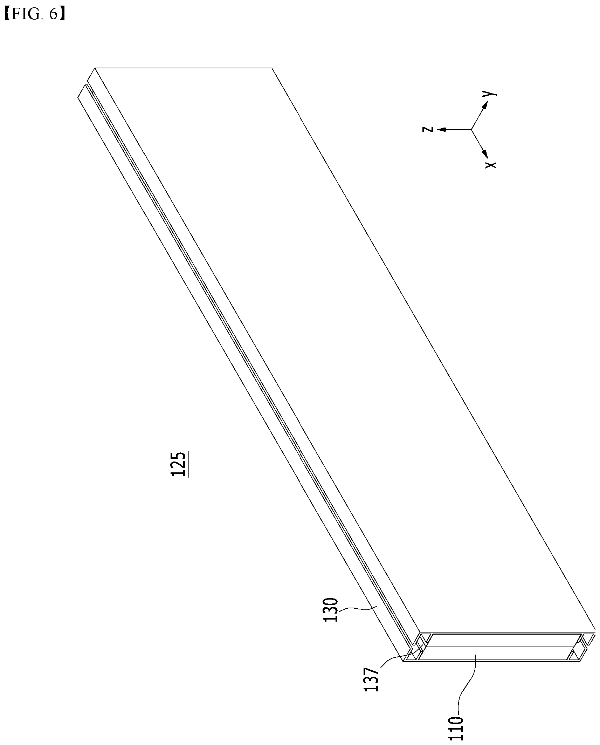

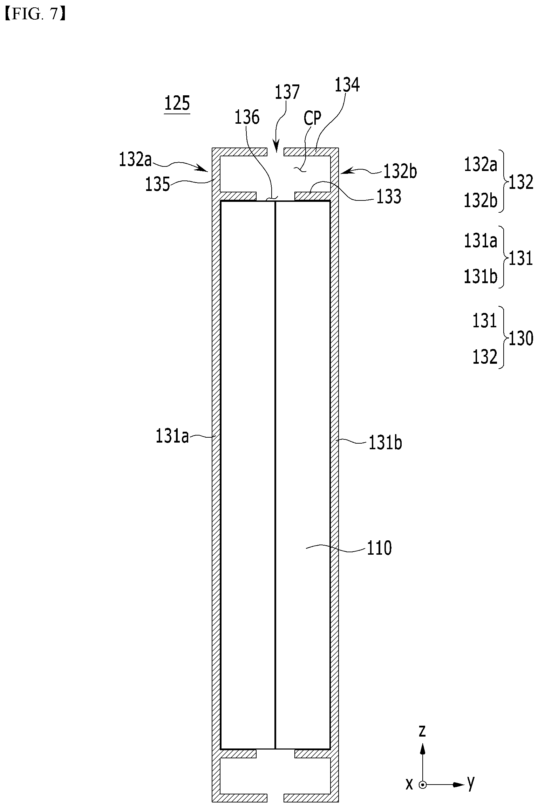

FIG. 6 is a perspective view showing a cell unit included in the battery module of FIG. 4. FIG. 7 is a front view of the cell unit of FIG. 6 viewed along the x-axis direction.

Referring to FIGS. 6 and 7, the cell unit 125 according to the present embodiment includes a battery cell 110 and a heat dissipation member 130. The heat dissipation member 130 includes a plate-shaped member 131 parallel to one surface of the battery cell 110, and a reinforcing member 132 extending from at least one of the first part and the second part of the plate-shaped member 131. In one example, the first part of the plate-like member 131 may be the upper edge, and the second part may be a lower edge. The reinforcing member 132 according to the embodiment of FIG. 7 has a structure extending from the upper edge and the lower edge of the plate-shaped member 131.

Specifically, referring to FIG. 7, the reinforcing member 132 according to the present embodiment includes a first reinforcing member 132a and a second reinforcing member 132b. The first and second reinforcing members 132a and 132b each include at least two extension parts 133 and 134 arranged parallel to each other. At this time, at least two extension parts 133 and 134 may extend from the plate-shaped member 131 in the same direction.

Each of the first and second reinforcing members 132a and 132b includes a first extension part 133 that is bent from one edge of the plate-shaped member 131 and covers the upper and lower surfaces of the battery cell 110, a connecting part 135 that extends from one edge of the plate-shaped member 131 at regular intervals along the same direction as the direction in which the plate-shaped member 131 extends, and a second extension part 134 that is bent from the end of the connecting part 135.

The reinforcing member 132 according to the present embodiment may have an extrusion molding type structure.

A first opening part 136 that exposes a part of the upper surface and/or lower surface of the battery cell 110 may be formed between the first extension part 133 of the first reinforcing member 132a and the first extension part 133 of the second reinforcing member 132b. The first extension part 133 may come into direct contact with the battery cell 110.

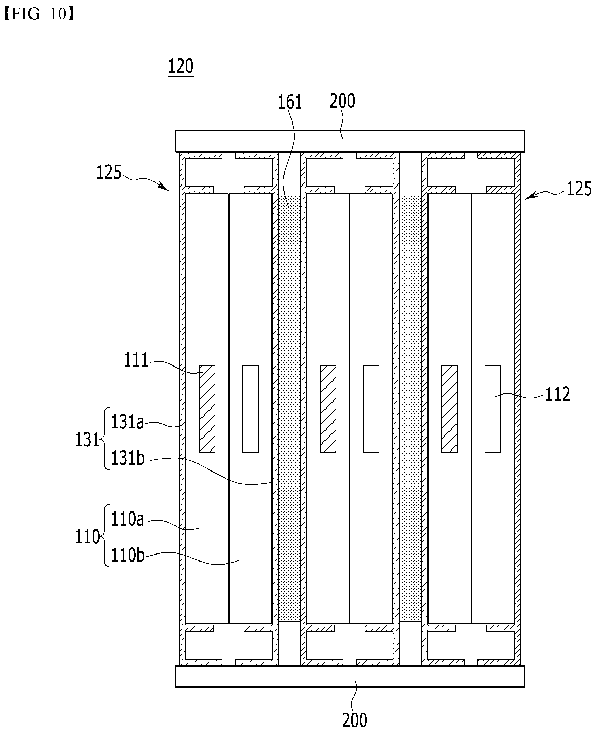

A second opening part 137 that exposes a part of the module frame 200 (FIG. 10) may be formed between the second extension part 134 of the first reinforcing member 132a and the second extension part 134 of the second reinforcing member 132b. At this time, a cooling passage CP is formed inside the first and second reinforcing members 132a and 132b,

The cooling passage CP is impregnated with an insulating coolant, so that the insulating coolant and the battery cell 110 can come into direct contact with each other through the first opening part 136.

Further, the insulating coolant and the module frame 200 (FIG. 10) may come into direct contact with each other through the second opening part 137. Thus, according to the present embodiment, the insulating coolant can come into direct contact with the battery cell 110 and/or the module frame 200 (FIG. 10) to improve cooling performance. In addition, since vertical vibration can be absorbed through the reinforcing members 132 located at the upper and lower parts the battery cell 110, thereby improving structural stability.

Heat generated in the battery cell 110 is transmitted along the plate-shaped members 131a and 131b, and the reinforcing members 132a and 132b come into direct contact with the insulating coolant through the cooling passage CP to exhibit a cooling effect.

Thus, according to the present embodiment, in a cooling structure in which an insulating coolant is impregnated within the module frame 200 (FIG. 4), the heat dissipation member 130 interposed between the battery cells 110 extends from the upper part and/or lower part of the cell assembly 120 (FIG. 4) and comes into direct contact with the insulating coolant, thereby increasing cooling efficiency. In addition, since heat is transferred to both the upper and lower parts of the battery module from the plate-shaped member 131 of the heat dissipation member 130 coming into contact with the cell body of the battery cell 110, the temperature difference does not appear large, so the life of the battery cell 110 can be extended.

The heat dissipation member 130 may be formed of a material with high thermal conductivity. For example, the heat dissipation member 130 according to this embodiment includes aluminum, stainless steel, copper, gold, graphite, graphene, CNT (carbon nanotube), or a composite material thereof. In one example, thermal conductivity and weight can be adjusted by using aluminum-graphite composite material. The heat dissipation member 130 may have a form in which at least two of aluminum, stainless steel, copper, gold, graphite, graphene, and carbon nanotubes (CNTs) are laminated together. Further, by laminating the polyethylene terephthalate (PET) insulating layer and the composite material, an effective heat dissipation structure can be formed using a lighter and thinner material compared to the conventional cooling fin structure as a heat dissipation member. The PET insulating layer can realize insulation between the battery cell 110 and the heat dissipation member 130. The PET insulating layer may be laminated on the front and rear surfaces of the aluminum-graphite composite material layer to be disposed between the heat dissipation member 130 and the battery cell 110. To bond the aluminum-graphite composite material layer and the PET insulation layer, adhesive can be applied between them or a heat fusion method can be used. In a comparative example, when insulating coating is applied to the heat dissipation member 130, coating liquid may collect in the part where the heat dissipation member 130 is insulated, which makes it difficult to achieve a uniform coating thickness.

Therefore, the heat dissipation member 130 according to the present embodiment can effectively transfer heat generated in the cell assembly 120 to the outside, thereby improving the cooling performance of the battery module 100.

The heat dissipation member 130 according to this embodiment may be a thin film. The thickness of the heat dissipation member 130 may be smaller than the thickness of the battery cell 110. Preferably, the thickness of the heat dissipation member 130 may be about 50% or less, or more preferably, 20% or less of the thickness of the battery cell 110. Here, the thickness of the battery cell 110 may be a size based on the y-axis direction of FIG. 6.

The thickness of the heat dissipation member 130 may be 0.1 mm to 0.2 mm. Therefore, even if the area where the heat dissipation member 130 covers the surface corresponding to the cell body 113 of each battery cell 110 constituting the cell assembly 120 and the upper or lower part of the battery cell 110 is large, it may not have a large influence on the energy density of the battery module.

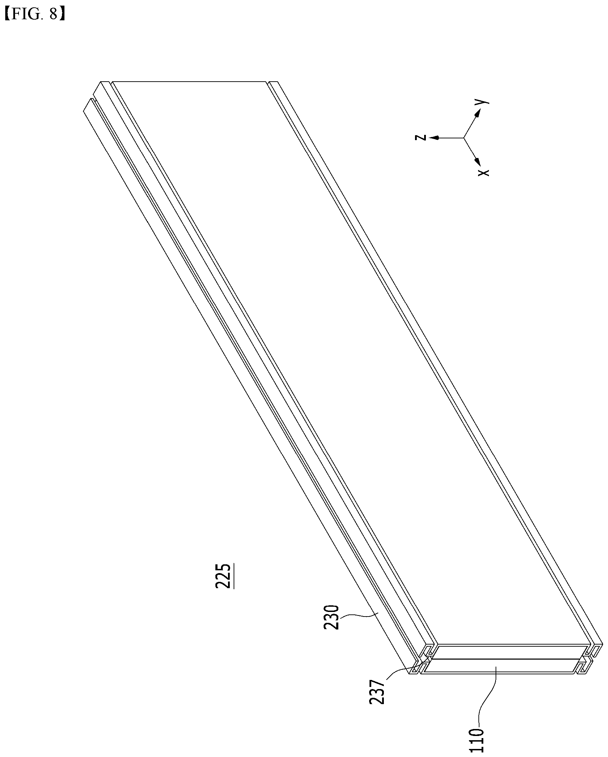

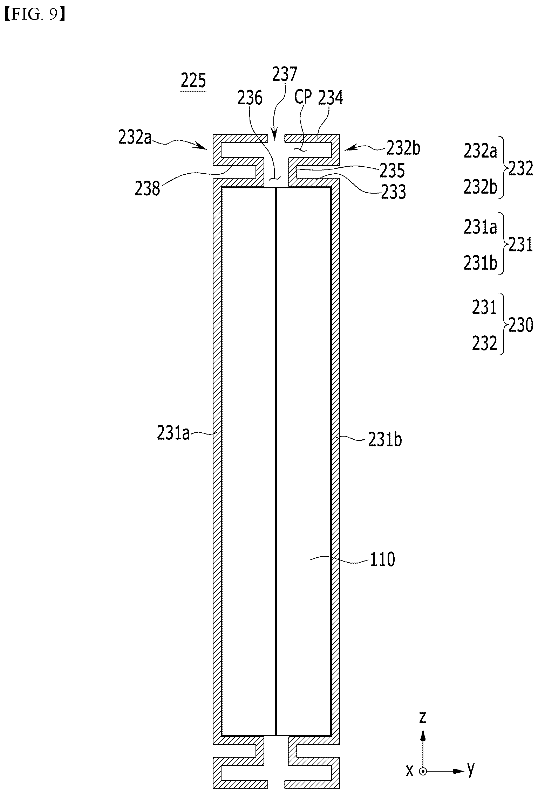

FIG. 8 is a perspective view showing a cell unit according to another embodiment of the present disclosure. FIG. 9 is a front view of the cell unit of FIG. 8 viewed along the x-axis direction.

Referring to FIGS. 8 and 9, the cell unit 225 according to the present embodiment includes a battery cell 110 and a heat dissipation member 230. The heat dissipation member 230 includes a plate-shaped member 231 parallel to one surface of the battery cell 110, and a reinforcing member 232 that extends from at least one of the first part and the second part of the plate-shaped member 231. In one example, the first part of the plate-shaped member 231 may be an upper edge, and the second part may be a lower edge. The reinforcing member 232 according to the embodiment of FIG. 9 has a structure extending from the upper edge and lower edges of the plate-shaped member 231.

Specifically, referring to FIIG. 9, the reinforcing member 232 according to the present embodiment includes a first reinforcing member 232a and a second reinforcing member 232b. The first and second reinforcing members 232a and 232b may be formed to extend in a zigzag shape from the plate-shaped member 231, respectively.

Each of the first and second reinforcing members 232a and 232b includes a first extension part 233 that is bent from one edge of the plate-shaped member 231 and covers the upper surface and lower surface of the battery cell 110, a connecting part 235 that is bent from one edge of the first extension part 233 and extends at regular intervals along the same direction as the direction in which the plate-shaped member 231 extends, a second extension part 238 that is bent from the end of the connecting part 235, a connecting parts 235 that extends at regular intervals along the same direction as the direction in which the plate-shaped member 231 bent from the end of the second extension portion 238 extends, and a third extension part 234 that is bent from the end of the connecting part 235.

The connecting parts 235 may be arranged parallel to each other, and the first, second, and third extension parts 233, 238, and 234 may be arranged parallel to each other.

The reinforcing member 232 according to the present embodiment may have a press molding type structure.

A first opening part 236 that exposes a part of the upper surface and/or lower surface of the battery cell 110 may be formed between the first extension part 233 of the first reinforcing member 232a and the first extension part 233 of the second reinforcing member 232b. The first extension part 233 may come into direct contact with the battery cell 110.

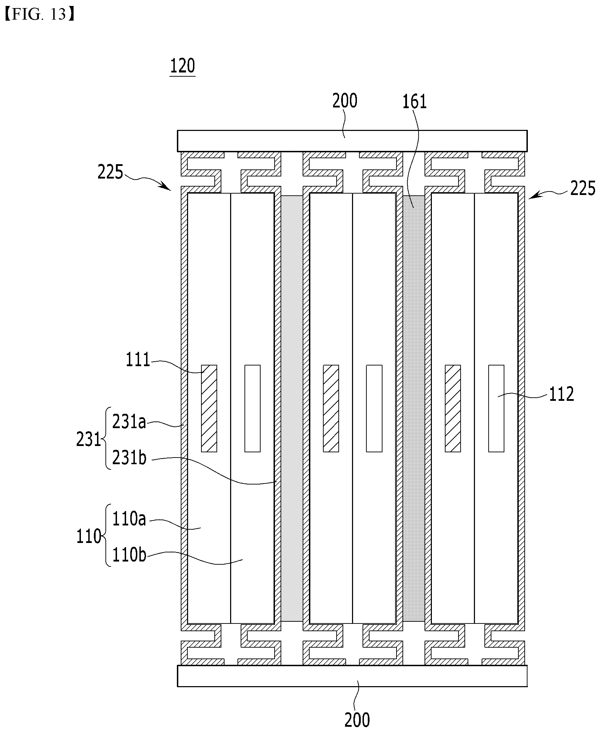

A second opening part 237 that exposes a part of the module frame 200 (FIG. 13) may be formed between the third extension part 234 of the first reinforcing member 232a and the third extension part 234 of the second reinforcing member 232b. At this time, a cooling passage CP is formed inside the first and second reinforcing members 232a and 232b, and the cooling passage CP is impregnated with an insulating coolant, so that the insulating coolant and the battery cell 110 can come into direct contact with each other through the first opening part 236. Further, the insulating coolant and the module frame 200 (FIG. 13) may come into direct contact with each other through the second opening part 237. Thus, according to the present embodiment, the insulating coolant can come into direct contact with the battery cells 110 and/or the module frame 200 (FIG. 13) to improve cooling performance.

In addition to the differences based on the content described above, the contents regarding the material and structure of the heat dissipation member 130 and the heat transfer path described in FIGS. 6 and 7 can be similarly applied to the heat dissipation member 230 according to the present embodiment.

FIG. 10 is a diagram showing a part of a cell assembly including the cell unit of FIG. 6.

Referring to FIG. 10, the cell assembly 120 can be formed by stacking a plurality of cell units 125 described in FIGS. 6 and 7. The cell unit 125 according to the present embodiment includes a first battery cell 110a and a second battery cell 110b that come into direct contact with each other, a first heat dissipation member 131a located on one surface of the first battery cell 110a, and a second heat dissipation member 131b located on one surface of the second battery cell 110b. Such cell units 125 may be repeatedly arranged to form a cell assembly. According to the present embodiment, a compression pad 161 may be located between mutually adjacent cell units 125 among the cell units 125 stacked in a plurality of numbers. The compression pad 161 may be formed in pairs with one cell unit 125, or may be formed one for each two cell units 125. However, the present disclosure is not limited thereto, and the number of the compression pads 161 may be changed.

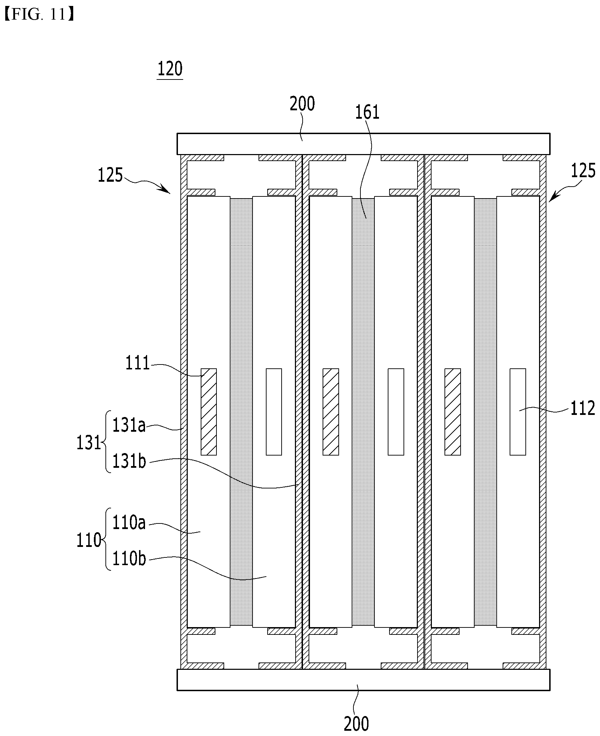

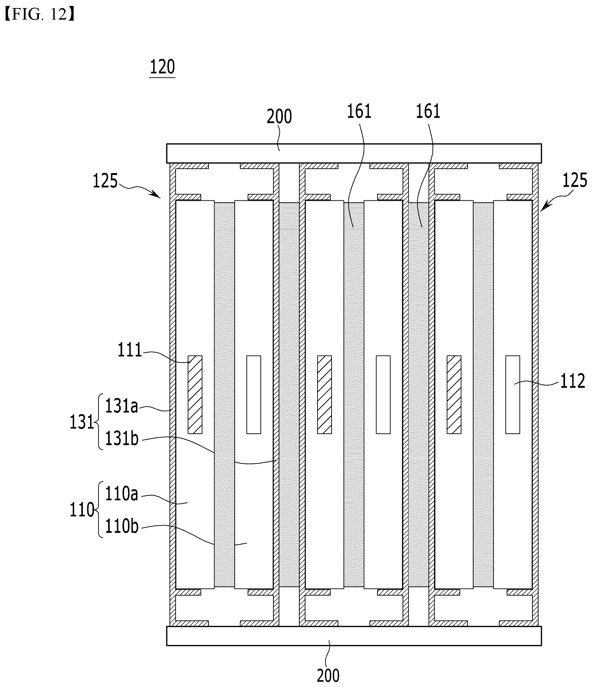

FIGS. 11 and 12 are diagrams showing a modification of the cell assembly of FIG. 10.

The embodiments described in FIGS. 11 and 12 are mostly the same as the embodiment described in FIG. 10, and differences will be described below.

Referring to FIG. 11, a compression pad 161 may be formed between the first battery cell 110a and the second battery cell 110b included in one cell unit 125. At this time, the mutually adjacent cell units 125 may come into direct contact with each other. Cell units 125 that come into direct contact with each other may be fixed to each other using an adhesive member (not shown) or the like.

Referring to FIG. 12, a compression pad 161 is formed between the first battery cell 110a and the second battery cell 110b included in one cell unit 125, and further, a compression pad 161 may be located between mutually adjacent cell units 125 among the cell units 125 stacked in a plurality of numbers of stacked cell units 125.

In addition to the differences described above, the contents described in FIG. 10 can be applied to both the embodiments of FIGS. 11 and 12.

The compression pad 161 previously described can reduce changes in the shape of the battery module at the time of swelling the battery cells 110, thereby increasing safety. When the embodiment of FIG. 10, the embodiment of FIG. 11, and the embodiment of FIG. 12 are referred to as the first, second, and third embodiments, respectively, the degree of impact relief against swelling is high in the order of the third embodiment, the second embodiment, and the first embodiment, whereby various designs can be made in consideration of the level required for the user's battery module design.

FIG. 13 is a diagram showing a part of a cell assembly including the cell unit of FIG. 8.

Referring to FIG. 13, the cell assembly 120 can be formed by stacking a plurality of cell units 225 described in FIGS. 8 and 9. The cell unit 225 according to the present embodiment may include a first battery cell 110a and a second battery cell 110b that come into contact with each other, a first heat dissipation member 231a located on one surface of the first battery cell 110a, and a second heat dissipation member 231b located on one surface of the second battery cell 110b. Such cell units 225 may be repeatedly arranged to form a cell assembly. According to the present embodiment, a compression pad 161 may be located between mutually adjacent cell units 225 among the cell units 225 stacked in a plurality of numbers. The compression pad 161 may be formed in pairs with one cell unit 225 or may be formed one for each two cell units 225. However, the present disclosure is not limited thereto, and the number of compression pads 161 may be changed.

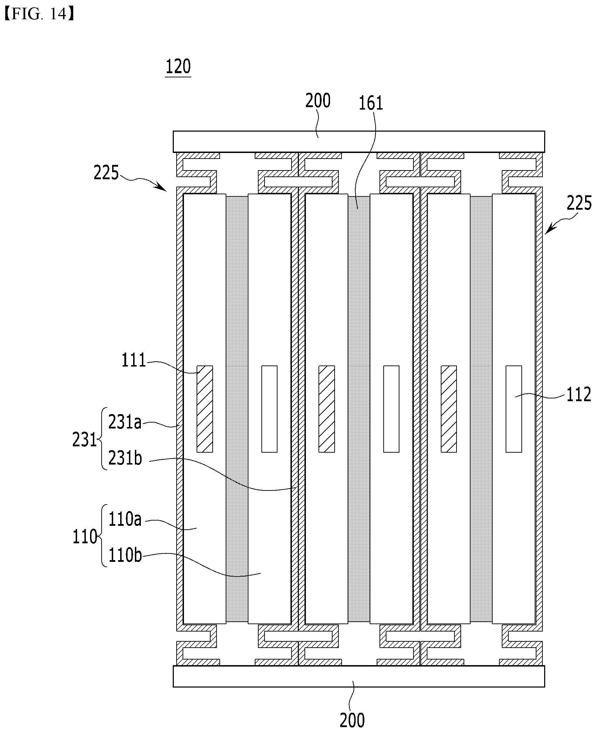

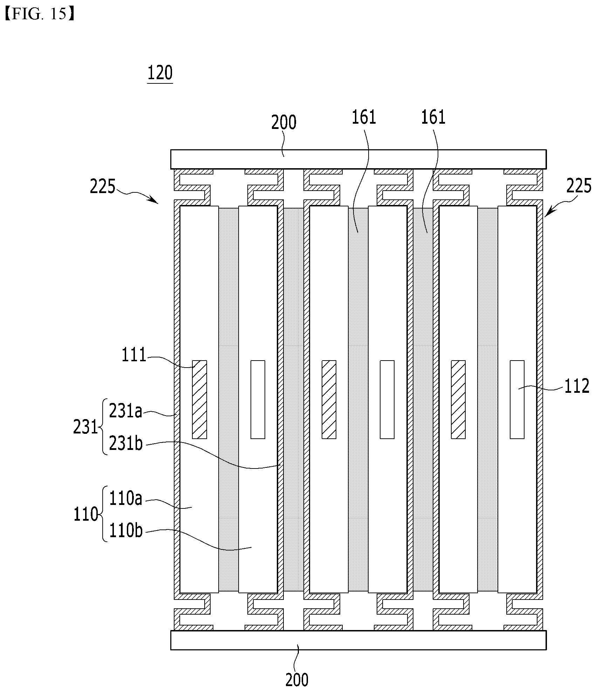

FIGS. 14 and 15 are diagrams showing modifications of the cell assembly of FIG. 13.

The embodiments described in FIGS. 14 and 15 are mostly the same as the embodiment described in FIG. 13, and differences will be described below.

Referring to FIG. 14, a compression pad 161 may be formed between the first battery cell 110a and the second battery cell 110b included in one cell unit 225. At this time, mutually adjacent cell units 225 may come into direct contact with each other. The cell units 225 that come into direct contact with each other may be fixed to each other using an adhesive member (not shown) or the like.

Referring to FIG. 15, a compression pad 161 is formed between the first battery cell 110a and the second battery cell 110b included in one cell unit 225, and further, a compression pad 161 may be located between mutually adjacent cell units 225 among the cell units 225 stacked in a plurality of numbers.

In addition to the differences described above, the contents described in FIG. 13 can be applied to both the embodiments of FIGS. 14 and 15.

The compression pad 161 previously described can reduce changes in the shape of the battery module when the battery cells 110 swell, thereby increasing safety. When the embodiment of FIG. 13, the embodiment of FIG. 14, and the embodiment of FIG. 15 are referred to as the fourth, fifth, and sixth embodiments, respectively, the degree of impact relief against swelling is high in the order of the sixth embodiment, the fifth embodiment, and the fourth embodiment, whereby various designs can be made in consideration of the level required for the user's battery module design.

According to yet another embodiment of the present disclosure, there is provided a battery pack includes the battery module previously described. In addition, the battery pack according to the present embodiment may have a structure in which one or more of the battery modules are gathered, and packed together with a battery management system (BMS) and a cooling device that control and manage battery's temperature, voltage, etc.

The battery pack can be applied to various devices. Such a device can be applied to a vehicle means such as an electric bicycle, an electric vehicle, or a hybrid vehicle, but the present disclosure is not limited thereto, and is applicable to various devices that can use a battery module, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Reference Numerals]

100: battery module
110: battery cell
113: cell body
120: cell assembly
130, 230: heat dissipation member
131, 231: plate-shaped member
132, 232: reinforcing member
132a, 232a: first reinforcing member
132b, 232b: second reinforcing member
133, 134, 233, 234, 238: extension part
135, 235: connecting part
136, 236: first opening part
137, 237: second opening section
161: compression pad
200: module frame
125, 225: cell unit
CP: cooling passage

## Claims

1. A battery module comprising:
a cell assembly formed by stacking a plurality of battery cells in one direction,
a heat dissipation member that comes into contact with the battery cell within the cell assembly, and
a module frame that houses the cell assembly,
wherein the heat dissipation member includes a plate-shaped member parallel to one surface of the battery cell, and a reinforcing member extending from at least one of the first part and the second part of the plate-shaped member.

2. The battery module according to claim 1, wherein:
a cell unit including the battery cell and the heat dissipation member comprises,
a first battery cell and a second battery cell,
a first heat dissipation member located on one surface of the first battery cell, and
a second heat dissipation member located on one surface of the second battery cell,
wherein among the extension parts of the first and second reinforcing members included respectively in the first and second heat dissipation members, a first opening part that exposes a part of the first and second battery cells is formed between the extension parts that come into direct contact with the first and second battery cells.

3. The battery module according to claim 2, wherein:
a second opening part that exposes a part of the module frame is formed between the extension part of the first reinforcing member and the extension part of the second reinforcing member.

4. The battery module according to claim 3, wherein:
a cooling passage is formed inside the first and second reinforcing members, and the cooling passage is impregnated with an insulating coolant, so that the insulating coolant and the battery cell come into direct contact with each other through the first opening part.

5. The battery module according to claim 2, wherein:
the cell units are stacked in a plurality of numbers within the cell assembly, and
further comprise a compression pad located between mutually adjacent cell units among the cell units stacked in a plurality of numbers.

6. The battery module according to claim 2, wherein:
the cell unit further comprises a compression pad located between the first battery cell and the second battery cell.

7. The battery module according to claim 6, wherein:
the cell units are stacked in a plurality of numbers within the cell assembly, and
the battery module further comprise a compression pad located between mutually adjacent cell units among the cell units stacked in a plurality of numbers.

8. The battery module according to claim 1, wherein:
the reinforcing member comprises at least two extension parts parallel to each other, and
a cooling passage is formed between the two extension parts.

9. The battery module according to claim 8, wherein:
the cooling passage is impregnated with an insulating coolant, so that the insulating coolant and the battery cell come into direct contact with each other.

10. The battery module according to claim 1, wherein:
the reinforcing member has an extrusion molding type structure.

11. The battery module according to claim 10, wherein:
the at least two extension parts extend in the same direction from the plate-shaped member.

12. The battery module according to claim 1, wherein:
the reinforcing member has a press molding type structure.

13. The battery module according to claim 12, wherein:
the reinforcing member extends from the plate-shaped member in a zigzag shape, and is formed in the space between the battery cell and the module frame.

14. The battery module according to claim 1, wherein:
the reinforcing members are formed on an upper edge and a lower edge of the plate-shaped member, respectively, and the reinforcing member comes into contact with an upper part and a lower part of the module frame, respectively.

15. The battery module according to claim 1, wherein:
the plate-shaped member and the reinforcing member included in the heat dissipation member are integrally formed, and the reinforcing member is formed by bending the plate-shaped member.

16. The battery module according to claim 1, wherein:
the heat dissipation member comprises aluminum, stainless steel, copper, gold, graphite, graphene, CNT (carbon nanotube), or a composite material thereof.

17. The battery module according to claim 16, wherein:
the heat dissipation member has a form in which at least two of aluminum, stainless steel, copper, gold, graphite, graphene, and CNT (carbon nanotube) are laminated together.

18. The battery module according to claim 1, wherein:
an insulating coolant is impregnated within the module frame.

19. A battery pack comprising the battery module according to claim 1.
